Europäisches Patentamt

European Patent Office

Office européen des brevets

(11) Publication number: **0 091 656**
A2

# EUROPEAN PATENT APPLICATION

(21) Application number: **83103363.4**

(22) Date of filing: **06.04.83**

(51) Int. Cl.³: **B 60 K 17/22**
**F 16 F 7/10**

(30) Priority: **10.04.82 JP 60035/82**

(43) Date of publication of application:
**19.10.83 Bulletin 83/42**

(84) Designated Contracting States:
**DE FR GB**

(71) Applicant: NISSAN MOTOR COMPANY, LIMITED
No.2, Takara-cho, Kanagawa-ku
Yokohama-shi Kanagawa-ken 221(JP)

(72) Inventor: Nishihara, Shigeki
4688-1, Sobudai 3-chome Zama-shi
Kanagawa-ken(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Dynamic damper for a drive shaft of a vehicle.

(57) The dynamic damper for a drive shaft of an automotive vehicle, includes an annular weight having a diameter larger than that of the drive shaft, which is attached on the drive shaft through an annular elastic member. The circumference of the annular weight is covered by a cover member being made of a synthetic resin material, thereby preventing growth of a glocial deposit around the dynamic damper while the automotive vehicle is running in the cold district.

FIG. 2

# DYNAMIC DAMPER FOR A DRIVE SHAFT OF A VEHICLE

BACKGROUND OF THE INVENTION

The present invention relates to a dynamic damper for damping vibration of a drive shaft for an automotive vehicle, and more particularly to a dynamic damper having structure which can prevent the sticking of snow or ice.

A drive shaft of an automotive vehicle is in general provided with a dynamic damper for damping the vibration of the drive shaft. For example, as such a dynamic damper, there is known a damper that an annular-type weight is attached on the drive shaft through an elastic connection material.

However, in a conventional dynamic damper as mentioned above, the annular weight of the dynamic damper is covered by an elastic material such as rubber or the like whose surface is not smooth, so that its surface is subject to sticking of snow and ice when the automotive vehicle is running on the snowy and icy road in a cold district. Furthermore, the growth of the glacial deposit, namely snow and ice, may cause the critical damages to the neighbor functional parts and the body of the vhicle while the vehicle is running.

SUMMARY OF THE INVENTION

It is a general object of the present invention to provide an improved dynamic damper which obviates the above described problem inherent in the prior art.

It is another object of the invention to provide a dynamic damper which can effectively prevent the fixing of the snow and ice around the annular weight while an automotive vehicle is running in the cold district.

It is a further object of the invention to provide a dynamic damper which can remove the glacial deposit by a light shock force due to the vibration while running of the automotive vehicle.

It is still another object of the invention to provide a dynamic damper which can prevent the damages of the body and functional parts due to the glacial deposit around the dynamic damper.

It is a further object of the invention to provide a dynamic damper which can prevent scattering of muddy water or the like in undesired directions.

Brifly described, these and other objects of the invention are accomplished by the provision of an improved dynamic damper for a drive shaft of an automotive vehicle. The dynamic damper includes an annular weight which is attached on the drive shaft through an annular elastic member. The circumference of the annular weight is covered by a cover member being made of a synthetic resin material, thereby preventing growth of a glacial deposit around the dynamic damper while the automotive vehicle is running in the cold district.

BRIEF DESCRIPTION OF THE DRAWINGS

These and other objects, features and advantages of the present invention will be more apparent from the following description of a preferred embodiment, taken in conjunction with the accompanying drawings, in which:

FIG. 1 is a front view of a dynamic damper embodying the present invention;

FIG. 2 is a sectional view taken along lines II-II of FIG. 1;

FIG. 3 is a partial sectional view of a second embodiment of the dynamic damper according to the present invention;

FIG. 4 is a partial sectional view of a third embodiment of the dynamic damper according to the preseent invention; and

FIG. 5 is a partial sectional view of a fourth embodiment of the dynamic damper according to the invention.

DETAILED DESCRIPTION OF THE PREFERRED EMBODIMENTS

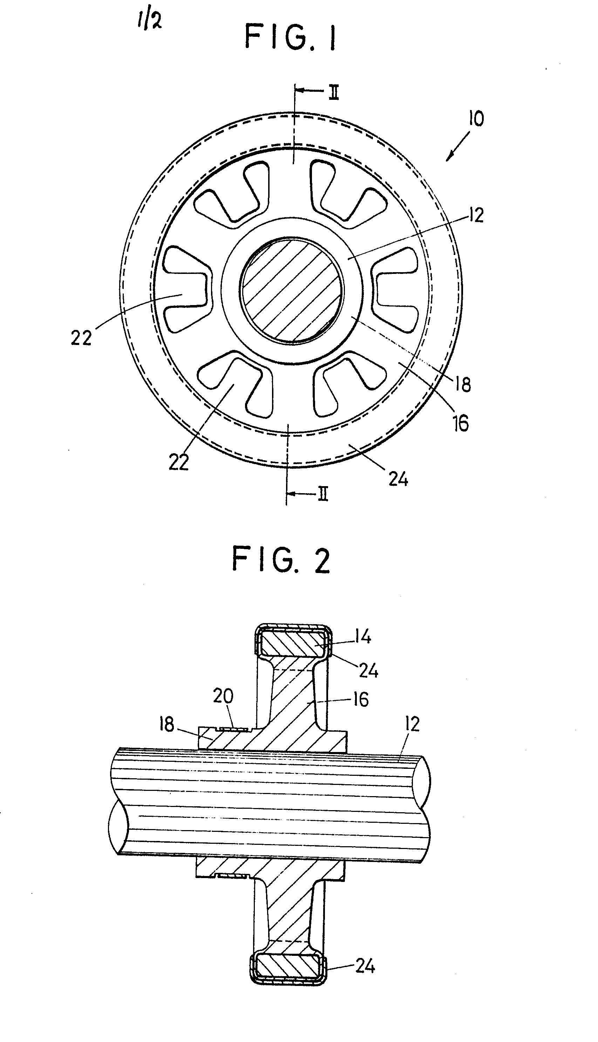

Referring now to FIG.1 and FIG.2, there is generally indicated at 10 a first embodiment of a dynamic damper, which is equipped to a part of a drive shaft 12 of an automotive vehicle or the like.

The dynamic damper 10 includes an annular weight 14 having a diameter larger than that of the drive shaft 12, and a ring-shaped elastic member 16 lying between the drive shaft 12 and the annular weight 14. The annular weight 14 is fixed in the elastic material 16 at the outer peripheral portion thereof so that it is substantially covered by the elastic material 16 as shown in FIG. 2. The annular weight 14 is associated with the ring-shaped elastic member 16 for absorbing vibration of the drive shaft 12. The elastic material 16 has a boss 18 at its inside, and is secured to the drive shaft 12 by fitting a band 20 on the periphery of the boss 18. The elastic material 16 is equipped with stoppers 22 for restricting the expansion and contraction amount of the elastic material 16 between the boss 18 and the annular weight 14.

The upper and side surfaces of the elastic material 16 enveloping the annular weight 14 are coated by a cover 24 consisting of a synthetic resin such as polypropylene, urethane, etc. which can provide smooth surface and has a good thermal insulation property.

The function of the dynamic damper in accordance with this embodiment will be described hereinbelow.

The dynamic damper 10 serves to damp the vibration of the drive shaft 12 when the automotive vehicle is running. While running on the snowy and icy road in the cold district, in particular, the dynamic damper is subject to snow and ice; however, since it is covered by the cover 24 of such a material as stated above, it is difficult for the snow and ice to stick on the smooth and thermally insulative surface of the resin cover 24. Thus, the adhesion and the development of the snow and ice on the dynamic damper 10 are prevented. Furthermore, if the snow and ice happen to stick around the damper 10, they are removed with the aid of the light shock force due to the running vibration or the like of the automotive vehicle. Therefore, although the snow and ice may attach to the surface of the dynamic damper temporarily, the growth of them will be prevented.

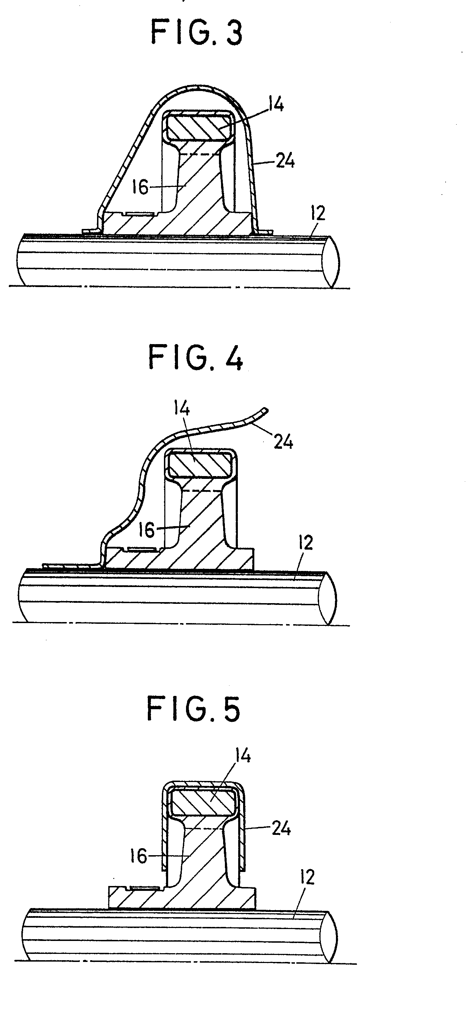

Next, other embodiments of the present invention will be described hereinafter with reference to FIGS. 3 to 5, in which the same parts and elements as those shown in FIGS. 1 and 2 will be designated by the same reference numerals and will not be described any further for the sake of simplicity.

Referring now to FIG. 3, there is shown a second embodiment of the dynamic damper of the present invention. In this embodiment, the synthetic resin material such as polypropylene, urethane, etc. surrounds the whole dynamic damper as the cover 24. This cover 24 is independently fixed to the drive shaft 12.

As shown in a third embodiment of FIG. 4, it may be possible to form the cover 24 so that it covers only a part of the dynamic damper. With such a construction of the cover 24 as shown in the second and third embodiment of FIG. 3 and 4, the similar effect as in the first embodiment discribed previously with respect to the sticking of the snow and ice can be derived; furthermore, there is also an advantage in which an appropriate shape of the cover 24 enables the controlling of the scattering direction of the muddy water while the automotive vehicle is running, thereby preventing the scattering of the muddy water in undesired directions.

In addition, by entirely covering the whole dynamic damper with the cover 24 as shown in the second embodiment of FIG. 3, in the case where the elastic material 16 is made of rubber, it is possible to prevent deteriorations of the rubber as the thermal aging of rubber, degeneracy due to ozone, or deterioration due to attachment of oil or grease, or the like.

Referring to FIG. 5, a fourth embodiment of the present invention is shown in which the cover 24 formed with the resin material such as polypropylene, urethane, etc. is directly adhered and fixed to the circumference of the annular weight 14 by using adhesive or the like. In this case, use of the resin material having a thermal contraction property as the above-mentioned resin material can eliminate the use of such fixing means as adhesive or the like since it is possible to substantially conform and stick the cover 24 around the circumferential faces of the annular weight by merely heating the cover 24 with, for example, hot water.  It is needless to say that with such a construction of the cover 24, it is possible to obtain the similar effect of the prevention of snow and ice as the afore-described embodiments.

Although, preferred embodiments of the invention are specifically illustrated and described herein, it will be appreciated that many modifications and variations of the present invention are possible in light of the above teachings and within the purview of the appended claims without departing from the spirit and intended scope of the invention.

WHAT IS CLAIMED IS:

1. A dynamic damper for damping vibration of a drive shaft for an automotive vehicle, comprising:

an annular elastic member being fixed to the drive shaft;

an annular weight member being fixed to said annular elastic member, said annular weight member associated with said annular elastic member for absorbing vibration of the dribe shaft; and

a cover member for providing a smooth and thermally insulative surface around said annular weight member and annular elastic member, thereby preventing growth of a glacial deposit around the dynamic damper while the automotive vehicle is running in the cold district.

2. A dynamic damper as claimed in claim 1, in which said cover member is made of a synthetic resin material.

3. A dynamic damper as claimed in claim 2, in which the synthetic resin material is a palypropylene.

4. A dynamic damper as claimed in claim 2, in which the synthetic resin material is a urethane.

5. A dynamic damper as claimed in claim 2, in which said annular weight member is fixed in said annular elastic member at the outer peripheral portion of said annular elastic member so that said annular weight member is covered by said annular elastic member.

6. A dynamic damper as claimed in claim 5, in which the upper surface and side surface of said annular elastic member enveloping said annular weight member are coated by said cover member.

7. A dynamic damper as claimed in claim 6, in which said annular elastic member includes a boss at its inside and a band, said annular elastic member being secured to the drive shaft by fitting the band on the periphery of the boss.

8. A dynamic damper as claimed in claim 5, in which said cover member surrounds an annular elastic member and an annular weight member and is independently fixed to the drive shaft

9. A dynamic damper as claimed in claim 5, in which said cover

0091656

member surrounds only a part of said annular elastic member and an annular weight member.

10. A dynamic damper as claimed in claim 5, in which said cover member is directly adhered to the outer surface of said annular elastic member enveloping said annular weight member by using adhesive.

11. A dynamic damper as claimed in claim 6, in which said annular elastic member further includes a plurality of stoppers for restricting the expansion and contraction amount of said elastic member.

12. A dynamic damper for a drive shaft of an automotive vehicle, comprising:

an annular elastic member including a boss at its inside, a band, and a plurality of stoppers for restricting the expansion and contraction amount of said elastic member, said annular elastic member being secured to the drive shaft by fitting the band on the periphery of the boss;

an annular weight member being fixed in said annular elastic member at the outer periheral portion of said annular elastic member so that said annular weight member is coverd by said annular elastic member; and

a cover member being made of a synthetic resin material, the upper surface and side surfaces of said annular elastic member enveloping said annular weight member being coated by said cover member.

# FIG. 1

# FIG. 2

# FIG. 3

14
24
16
12

# FIG. 4

14
24
16
12

# FIG. 5

14
24
16
12